# EUROPEAN PATENT APPLICATION

(11) **EP 1 900 982 A1**
(43) Date of publication of application: **19.03.2008**
(21) Application number: 07014593.3
(22) Date of filing: 25.07.2007
(51) Int. Cl.: F16J 15/16, F16J 15/32

(54) **Rotation shaft seal**

(30) Priority: 15.09.2006 JP 2006250733
(71) Applicant: Mitsubishi Cable Industries, Ltd., Chiyoda-ku Tokyo (JP)
(72) Inventor: Ashida, Tetsuya, Higashimukaijima, Amagasaki-shi Hyogo (JP); Oida, Hironori, Arida-shi Wakayama (JP)
(74) Representative: HOFFMANN EITLE

(57) **Abstract**

A rotation shaft seal provided with a seal element (1) having an axis-orthogonal wall portion (2) at right angles with an axis (X), a curved middle portion (3) which is continuing from an inner end of the axis-orthogonal wall I portion (2) and curving toward a high-pressure side (H), and a sealing lip portion (4) continuing from an end of the middle portion (3). The seal element (1) is provided with a thin wall portion (6) on the middle portion (3). Further, a supporting member (7), having a receiving face (9) to contact the thin wall portion (6) from a low-pressure side (L) and support the middle portion (3), is provided.

## Description

This invention relates to a rotation shaft seal.

As a conventional rotation shaft seal for sealing high-pressure fluid (liquid or gas), one having a construction in which a seal element of fluororesin such as polytetrafluoroethylene (mentioned below as PTFE) is stored within a metal case, and a back face of the seal element on a low-pressure side is supported by the metal case or a holding metal disposed within the metal case, is known (refer to Japanese Patent provisional publication No. 2003-194231, for example).

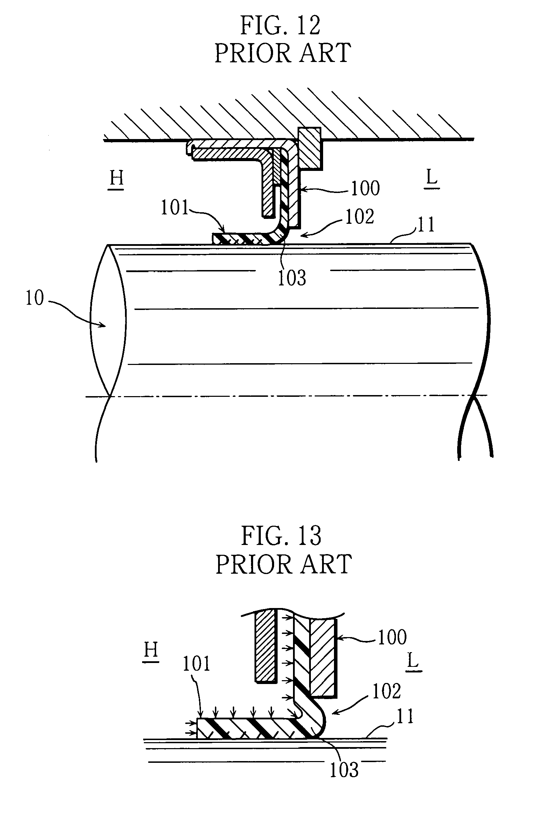

However, in the conventional rotation shaft seal as shown in Figure 12, in case that high pressure from a fluid-storing chamber side (a high-pressure side H) works on a seal element 101, excessive deformation is generated as that a curved portion 103 of the seal element 101 bent by the fluid pressure contacts a peripheral face 11 of a rotation shaft 10, the curved portion bulges out of a circular through hole 102 (for insertion of the rotation shaft 10) of the metal case 100 (refer to Figure 13), and sealability is reduced thereby. And, in case that strength of the seal element 101 is reduced by sliding heat on the rotation shaft 10, the curved portion 103 strongly contacts the peripheral face 11 of the rotation shaft 10 and generates local great abrasion. As described above, the conventional rotation shaft seal can not keep good sealability for a a long term.

And, although there is an idea that an inner end of the metal case 100 is formed as to extend with inclination toward the high-pressure side H for supporting the curved portion 103, the bulging of the curved portion 103 and the local abrasion can not be prevented.

It is therefore an object of the present invention to provide a rotation shaft seal with which good sealability is kept for a long period of time.

This object is solved according to the present invention by rotation shaft seal including the features of claim 1. Furthermore detailed embodiments are described in dependent claims 2, 3, 4, 5, 6, and 7.

The present invention will be described with reference to the accompanying drawings in which:
Figure 1 is a cross-sectional view showing a first embodiment of the present invention;
Figure 2 is an enlarged cross-sectional view of a principal portion;
Figure 3 is a cross-sectional view showing a second embodiment of the present invention;
Figure 4 is an enlarged cross-sectional view of a principal portion;
Figure 5 is a cross-sectional view showing a third embodiment of the present invention;
Figure 6 is an enlarged cross-sectional view of a principal portion;
Figure 7 is an enlarged cross-sectional view showing a fourth embodiment of the present invention;
Figure 8 is an enlarged cross-sectional view showing a fifth embodiment of the present invention;
Figure 9 is an enlarged cross-sectional view showing a sixth embodiment of the present invention;
Figure 10 is an enlarged cross-sectional view showing a seventh embodiment of the present invention;
Figure 11 is an enlarged cross-sectional view showing a eighth embodiment of the present invention;
Figure 12 is a cross-sectional view showing a conventional rotation shaft seal; and
Figure 13 is an enlarged cross-sectional view of a principal portion.

### DESCRIPTION OF THE PREFERRED EMBODIMENTS

Preferred embodiments of the present invention will now be described with reference to the accompanying drawings.

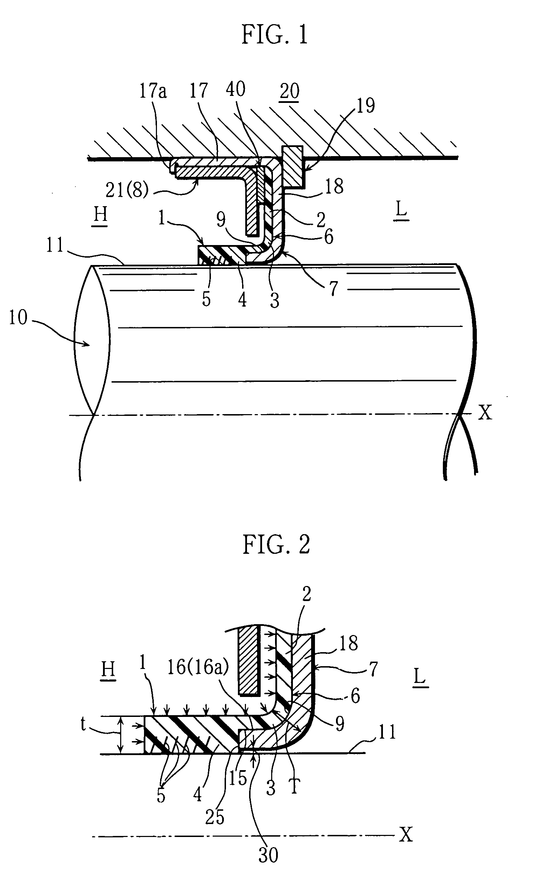

Figure 1 shows a first embodiment of a rotation shaft seal relating to the present invention. The rotation shaft seal is attached between a housing 20 and a rotation shaft 10 (attached state) in the figure. A stopping ring 19 is fit to a concave peripheral groove formed on an inner peripheral face of the housing 20, and the rotation shaft seal is stopped by the stopping ring 19. The left side is a high-pressure side H where sealed fluid is stored, and the right side is a low-pressure side L.

ln Figure 1, a mark 1 represents a seal element of resin such as PTFE and curving as an inner diameter side is in area contact with a peripheral face 11 of the rotation shaft 10 in the attached state. That is to say, the seal element 1 has an axis-orthogonal wall portion 2 at right angles with an axis X of the rotation shaft 10, a curved middle portion 3 continuing from an inner end of the axis-orthogonal wall portion 2 and curving toward the high-pressure side H, and a sealing lip portion 4 continuing from an end of the middle portion 3. And, a spiral groove 5 is formed on a sliding face of the sealing lip portion 4 on the rotation shaft 10.

A mark 7 represents a supporting member of metal to hold the seal element 1. The supporting member 7 has a cylindrical peripheral wall portion 17 and a holding piece portion 18 protruding inward from an end portion of the cylindrical peripheral wall portion 17 on the low-pressure side L in diameter direction and having an approximately J-shaped cross section. In other words, the supporting member 7 is an outer case in this embodiment.

In the supporting member (outer case) 7, the seal element 1, a gasket 40 of rubber or resin ring, and an inner case 21 (a holding member 8) having an inverted L-shaped cross section, are serially layered from the low-pressure side L to the high-pressure side H and fixed between an end edge 17a and the holding piece portion 18 by press-fitting of the end edge 17a of the peripheral wall portion 17 on the high-pressure side H. The gasket 40 may be disposed between the seal element 1 (the axis-orthogonal wall portion 2) and the supporting member 7.

The seal element 1 is provided with a thin wall portion 6 formed by cutting the seal element 1 from the axis-orthogonal wall portion 2 to the middle portion 3 on the low-pressure side L. The sealing lip portion 4 is formed to be thick. And, the supporting member 7 is disposed as to contact the thin wall portion 6 on the low-pressure side L and having an R-shaped receiving face 9 to support the curved middle portion 3. The configuration of the receiving face 9, although not shown in figures, may be a bent face approximately right-angled, or a straight inclined face.

Figure 2 shows a principal portion of the first embodiment shown in Figure 1. As shown in Figure 2, the supporting member 7 has a pressure-receiving face 16 to receive an inner-diameter face 15 of the middle portion 3, and a parallel face 16a, parallel to the peripheral face 11 of the rotation shaft 10, is formed on (the whole or a part of) the pressure-receiving face 16. The expression "parallel" is defined as to include approximate parallel in which the parallel face 16a slightly inclines against the peripheral face 11. It is preferable that the parallel face 16a is formed on the whole of the pressure-receiving face 16 and the parallel face 16a is disposed to be perfectly parallel to the peripheral face 11. As shown in Figure 2, the supporting member 7 has the pressure-receiving face 16 straight and continuing from the R-shaped receiving face 9, and the middle portion 3 (the thin wall portion 6) is supported by the R-shaped receiving face 9 and the straight pressure-receiving face 16 (the parallel face 16a).

And, a total thickness dimension T, in which a thickness dimension of the middle portion 3 (the thin wall portion 6) and a thickness dimension of the supporting member 7 from the receiving face 9 to the pressure-receiving face 16 are combined, is formed to be thinner than a thickness dimension t of the sealing lip portion 4.

And, an end face 25 of the supporting member 7, supporting a back face (an end face on the low-pressure side L) of the sealing lip portion 4, is disposed at right angles with the axis X.

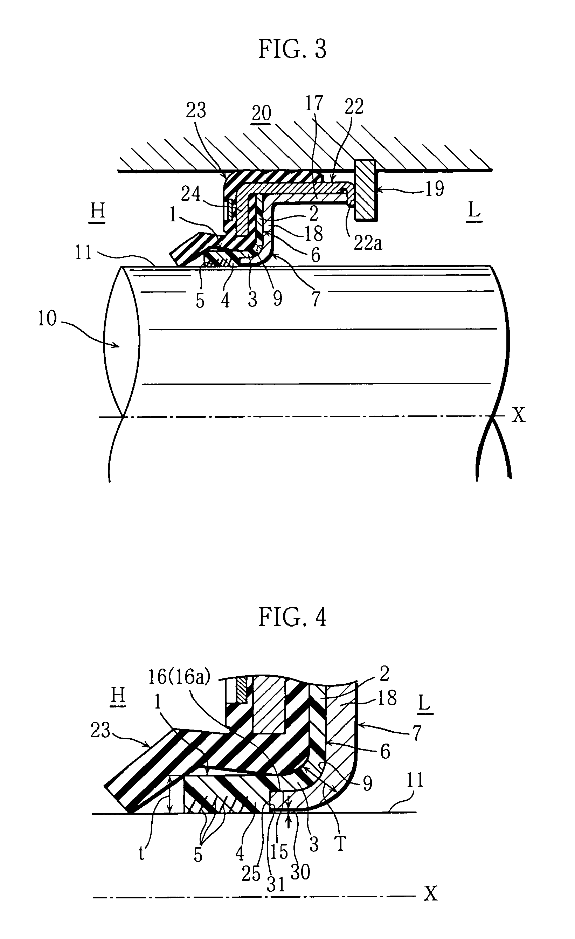

Next, Figure 3 shows a second embodiment of the present invention. ln Figure 3, the supporting member 7 of metal, holding the seal element 1 of resin such as PTFE, is an inner case fit to an outer case 22.

In the concrete construction of the second embodiment of the rotation shaft seal, the outer case 22 has an inner brim portion 24 on an end edge on the high-pressure side H, and a rubber sealing portion 23 is unitedly fixed to the peripheral face of the outer face 22 and the both of front and rear faces of the inner brim portion 24. Further, the seal element 1 is sandwiched between the supporting member 7 and the rubber sealing portion 23 by press fitting of an end edge 22a of the outer case 22 on the low-pressure side L.

And, the supporting member 7 has a cylindrical peripheral wall portion 17 and a holding piece portion 18 protruding in an inward diameter direction from an end portion of the cylindrical peripheral wall portion 17 on the high-pressure side H and having an approximately J-shaped cross section.

The seal element 1 is provided with a thin wall portion 6 formed by cutting the seal element 1 from the axis-orthogonal wall portion 2 to the middle portion 3 on the low-pressure side L. And, the supporting member 7 is disposed as to contact the thin wall portion 6 and having an R-shaped receiving face 9 to support the curved middle portion 3.

Figure 4 shows a principal portion of the second embodiment. As shown in Figure 4, the supporting member 7 has a pressure-receiving face 16 to receive an inner-diameter face 15 of the middle portion 3, and the pressure-receiving face 16 has a parallel face 16a parallel to the peripheral face 11 of the rotation shaft 10.

That is to say, the supporting member 7 has the pressure-receiving face 16 straight and continuing from the R-shaped receiving face 9, and the middle portion 3 is supported by the R-shaped receiving face 9 and the straight pressure-receiving face 16 (the parallel face 16a).

And, a total thickness dimension T, in which a thickness dimension of the middle portion 3 and a thickness dimension of the supporting member 7 from the receiving face 9 to the pressure-receiving face 16 are combined, is formed to be thinner than a thickness dimension t of the sealing lip portion 4.

Description of the members, having the same marks as in Figure 1 and Figure 2 and not explained with Figure 3 and Figure 4, is omitted because they are similarly constructed as in Figure 1 and Figure 2.

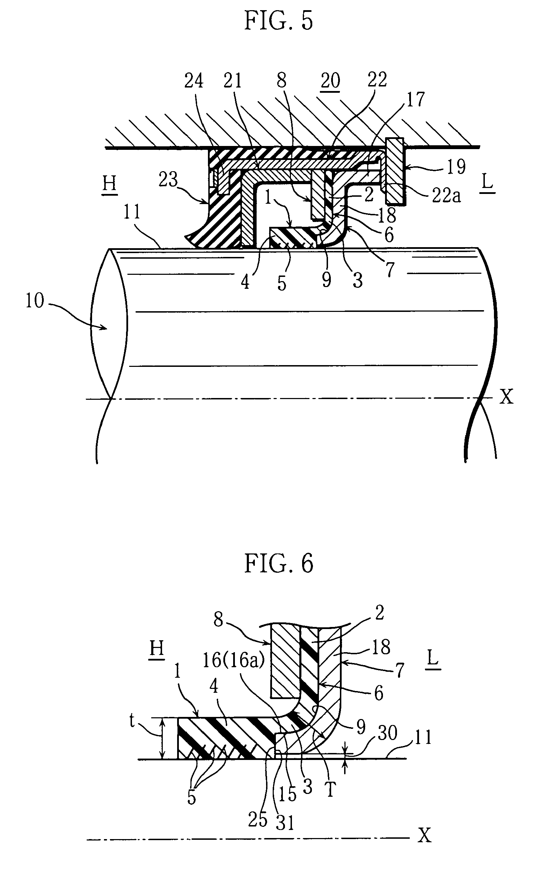

Next, Figure 5 shows a third embodiment of the present invention. In Figure 5, the supporting member 7 of metal, holding the seal element 1 of resin such as PTFE, is an inner case fit to an outer case 22.

A mark 22 represents the outer case having an inner brim portion 24 on an end edge on the high-pressure side H, and a mark 23 represents a rubber sealing portion unitedly fixed to the peripheral face of the outer face 22 and the both of front and rear faces of the inner brim portion 24. The supporting member 7, the seal element 1, a ring holding member 8, and the inner case 21 having an inverted L-shaped cross section are serially layered and fixed to the rubber sealing portion 23 by press fitting of an end edge 22a of the outer case 22 on the low-pressure side L.

And, the supporting member 7 has a cylindrical peripheral wall portion 17 and a holding piece portion 18 protruding in an inward diameter direction from an end portion of the cylindrical peripheral wall portion 17 on the high-pressure side H and having an approximately J-shaped cross section.

The seal element 1 is provided with a thin wall portion 6 formed by cutting the seal element 1 in a thickness direction from the axis-orthogonal wall portion 2 to the middle portion 3 on the low-pressure side L. And, the supporting member 7 is disposed as to contact the thin wall portion 6 and having an R-shaped receiving face 9 to support the curved middle portion 3.

And, in Figure 6 showing a principal portion of the third embodiment, the supporting member 7 has a pressure-receiving face 16 to receive an inner-diameter face 15 of the middle portion 3, and the pressure-receiving face 16 has a parallel face 16a parallel to the peripheral face 11 of the rotation shaft 10. And, the supporting member 7 has the pressure-receiving face 16 straight and continuing from the R-shaped receiving face 9, and the middle portion 3 is received by the R-shaped receiving face 9 and the straight pressure-receiving face 16 (the parallel face 16a).

And, a total thickness dimension T, in which a thickness dimension of the middle portion 3 and a thickness dimension of the supporting member 7 from the receiving face 9 to the pressure-receiving face 16 are combined, is formed to be thinner than a thickness dimension t of the sealing lip portion 4.

Description of the members, having the same marks as in Figure 1 and Figure 2 and not explained with Figure 5 and Figure 6, is omitted because they are similarly constructed as in Figure 1 and Figure 2.

The rotation shaft seal as in the second embodiment and the third embodiment is preferable as a rotation shaft seal used for compressors on car air conditioners.

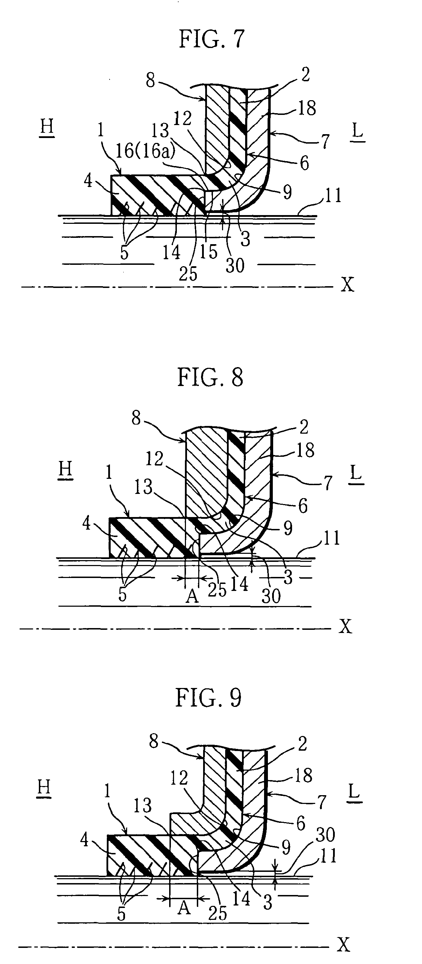

Figure 7 shows a fourth embodiment of the present invention. As shown in Figure 7, the seal element 1 is held between a holding member 8 (of ring) on the high-pressure side H and a supporting member 7 (a holding piece portion 18) on the low-pressure side L (refer to Figure 5). The holding member 8 has an R-shaped pressing face 12 to contact the curved middle portion 3 on an inner end edge. That is to say, in the fourth embodiment in Figure 7, the holding member 8 in the third embodiment in Figures 5 and 6 is extended in inward diameter direction, and a corner portion on an inner end edge on the low-pressure side L is formed to be R-shaped along the curved face of the middle portion 3.

Description of the members, having the same marks as in Figure 6, is omitted because they are similarly constructed as in Figure 6.

In a fifth embodiment of the present invention shown in Figure 8, the thickness dimension of the holding member 8 shown in Figure 7 is made large. And, an inner corner portion 13 to contact the seal element 1 (the peripheral face of the sealing lip portion 4) of the holding member 8 is disposed on a position which deviates from an end corner portion 14 to contact the middle portion 3 of the supporting member 7 in the axis X direction. That is to say, the inner corner portion 13 is disposed to deviate from the end corner portion 14 for an interval dimension A in the axis direction.

As described above, in the rotation shaft seal in Figure 8, the inner corner portion 13 is disposed on the position in contact with the peripheral face of the sealing lip portion 4 (with deviation from the end corner portion 14 in the axis X direction) to hold the sealing lip portion 4 from the peripheral side as the sealing lip portion 4 has stable area contact with the peripheral face 11 of the rotation shaft 10, and to preferably avoid stress concentration on contact portions of the inner corner portion 13 and the end corner portion 14 in pressure-receiving state.

And, Figure 9 shows a sixth embodiment of the present invention in which the end (inner end) of the holding member 8 may be curved toward the high-pressure side H. To describe in detail, an R-shaped pressing face 12 to contact the middle portion 3 is formed on the curved inner end edge of the holding member 8, and the inner corner portion 13 of the holding member 8 to contact the peripheral face of the sealing lip portion 4 is disposed on a position which deviates from the end corner portion 14 to contact the middle portion 3 of the supporting member 7 (for the interval dimension A in the axis direction) in the axis X direction.

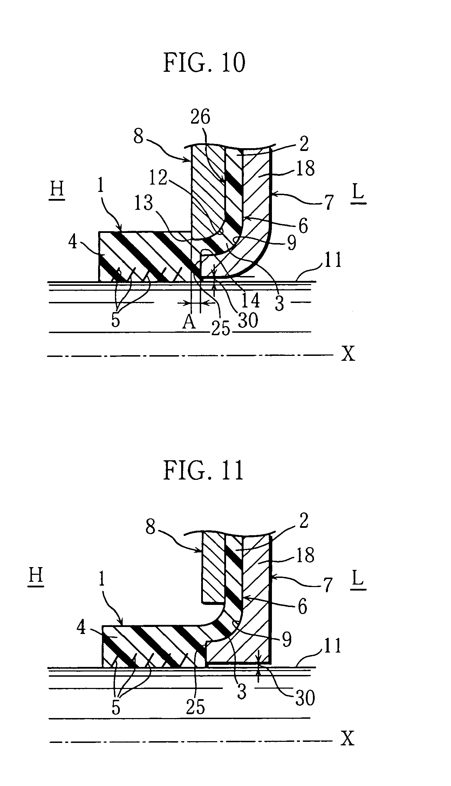

And, Figure 10 shows a seventh embodiment of the present invention. In this case, the seal element 1 is provided with a thin wall portion 6 formed by cutting the seal element 1 in thickness direction from the axis-orthogonal wall portion 2 to the middle portion 3 on the low-pressure side L and the high-pressure side H. And, the holding member 8 is disposed to contact a notched portion 26 on the high-pressure side H. And, the end edge of the holding member 8 has an R-shaped pressing face 12 to contact the middle portion 3, and the inner corner portion 13 to contact the notched portion 26 on the high-pressure side H is disposed on a position which deviates from the end corner portion 14 of the supporting member 7 (for the interval dimension A in the axis direction) in the axis X direction.

And, as in an eighth embodiment of the present invention shown in Figure 11, the inner end edge (on the low-pressure side L) of the supporting member 7 may be formed into an angled shape. On the contrary, the inner end edge (on the low-pressure side L) of the supporting member 7 is formed R-shape. That is to say, the supporting member 7 is made by press working in Figures 1 through 10, and by cutting in Figure 11.

Description of the members, having the same marks as in Figure 6 and not described with Figures 8 through 11, is omitted because they are similarly constructed as in Figure 6.

The present invention, not restricted to the embodiments described above, may have two or more seal elements 1. In this case, it is preferable to apply the above-described construction of the present invention to the seal element 1 disposed on the leftmost position on the high-pressure side H. And, the construction of the present invention may be applied to all of the seal elements 1.

And, the thin wall portion 6 may be formed not on the axis-orthogonal wall portion 2 of the seal element 1 but on the middle portion 3 (by cutting) as to become gradually thinner toward the end.

The supporting member 7 may be made of non-metal material. Production method can be one of ordinary methods such as press working (refer to Figures 1 through 10), cutting (refer to Figure 11), or forging when the supporting member 7 is made of metal. And, the thickness dimension of the supporting member 7 may be uniform, or formed (ununiformly) as to become thinner toward the end face 25 as shown in Figure 4.

And, the groove formed on the sliding face of the sealing lip portion 4 may be composed of plural independent concentric grooves other than a spiral groove, and the groove may be omitted.

A micro gap 30 is formed between the inner peripheral face of the supporting member 7 and the peripheral face 11 of the rotation shaft 10 in any of Figures 1 through 11.

The operation method (function) of the rotation shaft seal of the present invention is described.

The attached state, in which the rotation shaft seal of the present invention is attached between the housing 20 and the rotation shaft 10, is made (refer to Figure 1). When the sealed fluid stored on the high-pressure side H is pressurized, fluid pressure works on the seal element 1 in directions shown with arrows in Figure 2.

And, the middle portion 3 is received by the receiving face 9 in the pressure-receiving state in which the fluid pressure works. In other words, the curved configuration of the middle portion 3 before the pressure-receiving (in attached and unpressurized state) is kept by the (R-shaped) receiving face 9 also after the pressure-receiving.

And, inward pressing force in diameter direction by the fluid pressure works near the connecting portion of the middle portion 3 and the sealing lip portion 4. And, the inner diameter face 15 of the middle portion 3 is held by the peripheral face 11 and the parallel face 16a (the pressure-receiving face 16). As described above, the portion near the connection of the middle portion 3 and the sealing lip portion 4 is held by the parallel face 16a (the pressure-receiving face 16) as to be parallel to the peripheral face 11, and the sliding face of the sealing lip portion 4 is pressed parallel to the peripheral face 11 (with uniform contact pressure) thereby.

And, fluid pressure parallel to the axis works on the end face of the sealing lip portion 4. Then, the sealing lip portion 4 is pressed toward the low-pressure side L and supported by the end face 25 of the supporting member 7 as a staged face 31 formed by the cutting contacts the end face 25. As described above, the end face 25 of the supporting member 7 supports and prevents the sealing lip portion 4 from moving toward the low-pressure side L.

As described above, excessive deformation of the middle portion 3 in the pressure-receiving state is prevented and good sealability is achieved because the rotation shaft seal of the present invention is a rotation shaft seal provided with the seal element 1 having the axis-orthogonal wall portion 2 at right angles with the axis X, the curved middle portion 3 continuing from the inner end of the axis-orthogonal wall portion 2 and curving toward the high-pressure side H, and the sealing lip portion 4 continuing from the end of the middle portion 3, in which the seal element 1 is provided with the thin wall portion 6 on the middle portion 3, and the supporting member 7, having the receiving face 9 to contact the thin wall portion 6 from the low-pressure side L for supporting the middle portion 3, is provided. That is to say, the middle portion 3 is prevented from being greatly deformed and pressed to the peripheral face 11 of the rotation shaft 10 because the middle portion 3 is received by the receiving face 9 in the pressure-receiving state. Therefore, bulging of the middle portion and local abrasion in conventional products (refer to Figure 13) are prevented, and good sealability is maintained for a long period of time. Further, contact pressure to the rotation shaft 10 is reduced, heat generation is restricted, and sliding torque is reduced.

And, the sealing lip portion 4, which tends to be abraded, can be easily modified to be thick.

The thin wall portion 6 is easily formed because the thin wall portion 6 is formed by cutting the seal element 1 on the low-pressure side L in the thickness direction. And, the supporting member 7 is disposed within the cut portion, the sealing lip portion 4 (the staged face 31 on the low-pressure side L) is supported by the end face 25 of the supporting member 7, and the sealing lip portion 4 is prevented from moving toward the low-pressure side L to achieve good sealability.

The thin wall portion 6 is easily formed because the thin wall portion 6 is formed by cutting the seal element 1 on the low-pressure side L in the thickness direction from the axis-orthogonal wall portion 2 to the middle portion 3. And, the supporting member 7 is disposed within the cut portion, the sealing lip portion 4 (the staged face 31 on the low-pressure side L) is supported by the end face 25 of the supporting member 7, and the sealing lip portion 4 is prevented from moving toward the low-pressure side L to achieve good sealability.

The inner-diameter portion 15 of the middle portion 3 is received by the parallel face 16a to be parallel to the peripheral face 11 in the pressure-receiving state because the supporting member 7 has the pressure-receiving face 16 to receive the inner-diameter face 15 of the middle portion 3, and the parallel face 16a, parallel to the peripheral face 11 of the rotation shaft 10, is formed on the pressure-receiving face 16. That is to say, the portion near the connection of the middle portion 3 and the sealing lip portion 4 is held by the parallel face 16a as to be parallel to the peripheral face 11, and the sliding face of the sealing lip portion 4 is pressed parallel to the peripheral face 11 (to have area contact) thereby. Therefore, the contact pressure generated on the sliding face of the sealing lip portion 4 is made uniform and local abrasion of the sealing lip portion 4 is prevented to maintain the sealability for a long term.

And, the sealing lip portion 4 certainly fits to the peripheral face 11 in the pressure-receiving state to achieve good sealability because the total thickness dimension T, which is composed of the thickness dimension of the middle portion 3 and the thickness dimension from the R-shaped receiving face 9 to the pressure-receiving face 16 of the supporting member 7, is formed to be thinner than the thickness dimension t of the sealing lip portion 4.

And, the curved configuration of the middle portion before pressurization (in attached and unpressurized state) is certainly kept after the pressurization to achieve good sealability because the holding member 8, disposed on the high-pressure side H of the seal element 1 and holding the seal element 1 with the supporting member 7, is provided, and the R-shaped pressing face 12 to contact the middle portion 3 is formed on the inner end edge of the holding member 8.

And, stress concentration on contact portions of the inner corner portion 13 and the end corner portion 14 in pressure-receiving state is avoided and early deterioration of the seal element 1 is restricted because the inner corner portion 13 to contact the seal element 1 of the holding member 8 is disposed to deviate from the end corner portion 14 to contact the middle portion 3 of the supporting member 7 in the axis X direction.

## Claims

1. A rotation shaft seal provided with a seal element (1) having an axis-orthogonal wall portion (2) at right angles with an axis (X), a curved middle portion (3) continuing from an inner end of the axis-orthogonal wall portion (2) and curving toward a high-pressure side (H), and a sealing lip portion (4) continuing from an end of the middle portion (3) comprising a construction in which the seal element (1) is provided with a thin wall portion (6) on the middle portion (3), and, a supporting member (7), having a receiving face (9) to contact the thin wall portion (6) from a low-pressure side (L) for supporting the middle portion (3), is provided.

2. The rotation shaft seal as set forth in claim 1, wherein the thin wall portion (6) is formed by cutting the seal element (1) on the low-pressure side (L) in a thickness direction.

3. The rotation shaft seal as set forth in claim 1, wherein the thin wall portion (6) is formed by cutting the seal element (1) on the low-pressure side (L) in a thickness direction from the axis-orthogonal wall portion (2) to the middle portion (3).

4. The rotation shaft seal as set forth in claim 1, 2, or 3 wherein the supporting member (7) has a pressure-receiving face (16) to receive an inner-diameter face (15) of the middle portion (3), and a parallel face (16a), parallel to a peripheral face (11) of a rotation shaft (10), is formed on the pressure-receiving face (16).

5. The rotation shaft seal as set forth in claim 4, wherein a total thickness dimension (T), which is composed of a thickness dimension of the middle portion (3) and a thickness dimension from the receiving face (9) to the pressure-receiving face (16) of the supporting member (7), is formed to be thinner than a thickness dimension (t) of the sealing lip portion (4).

6. The rotation shaft seal as set forth in claim 1, 2, or 3 wherein a holding member (8), disposed on the high-pressure side (H) of the seal element (1) and holding the seal element (1) with the supporting member (7), is provided, and an R-shaped pressing face (12) to contact the middle portion (3) is formed on an inner end edge of the holding member (8).

7. The rotation shaft seal as set forth in claim 6, wherein an inner corner portion (13) to contact the seal element (1) of the holding member (8) is disposed to deviate from an end corner portion (14) to contact the middle portion (3) of the supporting member (7) in the axis (X) direction.
